# FASCICULE DE BREVET EUROPEEN

(11) **EP 1 979 519 B1**
(45) Date de publication et mention de la délivrance du brevet: **02.10.2013**
(21) Numéro de dépôt: 06794375.3
(22) Date de dépôt: 01.09.2006
(51) Int. Cl.: D04B 1/00, B24D 11/00, A47L 11/164, A47L 13/16

(54) **SYSTEME TRIDIMENSIONNEL A STRUCTURE SOUPLE**
DREIDIMENSIONALES SYSTEM MIT EINER FLEXIBLEN STRUKTUR
THREE-DIMENSIONAL SYSTEM HAVING A FLEXIBLE STRUCTURE

(30) Priorité: 17.01.2006 FR 0600392
(43) Date de publication de la demande: 15.10.2008
(73) Titulaire: Gekatex, 59930 La Chapelle d'Armentière (FR)
(72) Inventeur: BEYS, Ronald, 9880 Aalta (BE); SIX, Jacques, 75010 Paris (FR)
(74) Mandataire: Hirsch & Associés
(86) Numéro de dépôt international: PCT/FR2006/002017
(87) Numéro de publication internationale: WO 2007/083004

(56) Documents cités:
- EP-A- 0 391 000
- FR-A- 2 857 611
- US-A- 4 725 487
- KOWALSKI K ET AL: "STRUKTUR UND EIGENSCHAFTEN EINER NEUEN GRUPPE GESTRICKTER ABSTANDSTEXTILIEN" MELLIAND TEXTILBERICHTE, INTERNATIONAL TEXTILE REPORTS, MELLIAND TEXTILBERICHTE, FRANKFURT AM MAIN, DE, vol. 5, 1 mai 1999 (1999-05-01), pages 384-387, XP002294731 ISSN: 0341-0781

## Description

La présente invention concerne l'utilisation d'un système tridimensionnel de type tricot épais, à structure souple pour la réalisation de dispositifs d'abrasion, de polissage ou de lustrage. Notamment l'invention concerne l'utilisation d'un système tridimensionnel de type tricot épais, à structure souple pour la réalisation des disques d'abrasion, de polissage ou de lustrage, destinés à la retouche et à la finition de surfaces peintes, vernies et/ou traitées par d'autres procédés. Egalement la présente invention se rapporte à des dispositifs permettant le lustrage, le polissage et/ou l'abrasion.

Dans la demande française FR2 806 424 a été décrit un tricot épais double face à structure souple qui présente des qualités de souplesse et d'élasticité et possède une épaisseur minimale de 3 mm. Ce tricot épais, qui possède en outre des qualités de stabilité, de résistance à l'affaissement et une aptitude à reprendre son épaisseur initiale est utilisé en particulier dans les revêtements de sièges de voitures.

Dans la demande française FR2 857 611 ont été décrits des systèmes permettant le lustrage, pouvant procurer un résultat de qualité uniforme, constante et reproductible, malgré les imperfections de la surface traitée, du fait de leur souplesse et de leur aptitude à la compression, lors du contact avec ladite surface. Les systèmes décrits, permettent le lustrage "tridimensionnel" et comprennent une surface externe de fibres ou filaments aiguilletés disposés sur un support, munis d'une couche support arrière surmontant un élément formant interface comprenant une base de mousse polymère. Ladite base de mousse polymère est constituée de mousses suffisamment flexibles et souples pour conférer au système une adaptabilité aux imperfections de la surface à traiter, et suffisamment rigides pour avoir des qualités de résistance à la compression et résistance à l'échauffement nécessaires dans un appareillage industriel.

Dans la demande européenne EP 988 933 ont été décrits des disques de polissage constitués d'une surface externe de fibres isolées ou réparties en faisceaux, fixées sur une surface d'appui apportant la rigidité au système. Cette surface est contrecollée sur une surface arrière au moyen d'une colle. Les disques ainsi décrits sont utilisés sur un appareil à polir.

Egalement, l'utilisation pour le lustrage, de disques en peau de mouton, est largement connue.

Cependant, les dispositifs existants jusqu'à présent, ne permettaient pas d'assurer une finition parfaitement uniforme lorsque les surfaces traitées présentaient des imperfections et risquaient de provoquer pendant le traitement des phénomènes d'échauffement importants et non compatibles tant avec la surface à traiter qu'avec le dispositif utilisé pour la traiter. De plus les dispositifs employés n'étaient pas non plus adaptés à l'usage sur un appareillage industriel dans lequel la durée de vie des dispositifs d'abrasion, de polissage ou de lustrage doit être aussi longue que possible.

Il a été maintenant trouvé que l'utilisation d'un système tridimensionnel de type tricot épais, à structure souple, permettait de réaliser un dispositif capable de limiter et en partie éliminer l'énergie et les calories dues à l'échauffement.

Notamment ce dispositif peut être destiné à l'abrasion, au polissage ou au lustrage, mais il peut aussi être destiné à d'autres utilisations par exemple dans des circonstances ou une surface doit subir ou risque de subir un traitement entraînant un échauffement.

Il est bien connu de l'homme de métier que la peinture ou le vernis, par exemple sur les carrosseries de voiture ou sur les surfaces peintes ou vernies nécessitant une retouche de finition, présente des problèmes d'étalement régulier liés au gradient d'épaisseur. Il est donc souvent nécessaire de procéder à des opérations d'abrasion, de polissage et/ou de lustrage par des moyens mécaniques qui peuvent provoquer un échauffement aussi bien du disque que du support, échauffement qui conduit à une altération plus rapide du disque et aussi qui peut conduire à une altération du support (notamment formation d'hologrammes et/ou d'auréoles).

L'utilisation, selon l'invention d'un système tridimensionnel de type tricot épais, à structure souple, permet de réaliser un dispositif destiné à l'abrasion, au polissage ou au lustrage, dans lequel l'énergie et les calories dues à l'échauffement sont limitées et également dont la durée de vie est accrue et entraîne par conséquent une utilisation d'un moindre coût et aussi permet de réaliser des dispositifs qui présentent moins de risques de dégradation des peintures, des vernis ou des surfaces fragiles au cours de leur traitement. De plus, du fait du moindre échauffement, le dispositif permet de pratiquer l'abrasion, le polissage ou le lustrage avec un disque de même nature.

Selon l'invention le système tridimensionnel de type tricot épais, à structure souple est placé entre le revêtement arrière du dispositif (« jersey d'accrochage ») et la surface d'abrasion, de polissage et/ou de lustrage du dispositif.

Le système tridimensionnel de type tricot épais, à structure souple utilisé selon l'invention, notamment pour réaliser un dispositif destiné à l'abrasion, au polissage ou au lustrage, peut être avantageusement un système de type « tricot » comme par exemple un tricot très épais à structure souple présentant une bonne élasticité et capable de reprendre son épaisseur initiale après des écrasements prolongés et/ou répétés tel que décrit par exemple dans la demande française FR 2 806 424, incorporée ici à titre de référence. Le tricot épais est un tricot double face, d'une épaisseur au moins double de celle des tricots standards et dont l'épaisseur minimale est de 3 mm, ce tricot présentant une face avant et une face arrière, les 2 faces étant reliées entre elles par une couche intermédiaire de mono filaments de liaison.

Selon une utilisation objet de l'invention, les mono filaments de liaison du système tridimensionnel de type tricot épais, à structure souple, lient entre eux un rang de mailles d'une face et un rang de mailles de l'autre face, les 2 rangs étant en décalage dans le sens du tricotage l'un par rapport à l'autre, et 2 fils de liaison de 2 rangs différents sont toujours liés avec des mailles différentes d'un même rang ou à des rangs différents. Ainsi, le système de type tricot très épais à structure souple confère au dispositif destiné à l'abrasion, au polissage ou au lustrage des qualités de stabilité, d'élasticité et de résistance à l'affaissement et au glissement latéral.

Avantageusement les fils qui constituent les mailles des 2 faces et les fils qui constituent les mono filaments de liaison sont des fils de polyamide. De préférence l'épaisseur du système tridimensionnel à structure souple est supérieure à 3 mm et sa masse par unité de surface représente 100 à 600 g/m².

Le dispositif, tel que défini précédemment, par son aptitude à dissiper les calories est un système capable d'éviter des phénomènes d'échauffement à des températures trop élevées. Plus particulièrement, il est capable d'éviter des phénomènes d'échauffement par frottements et permet un travail "tridimensionnel", pouvant procurer un résultat d'abrasion, de polissage ou de lustrage de qualité uniforme, constante et reproductible malgré les imperfections de la surface traitée, notamment du fait de sa souplesse et de son aptitude à la compression, lors du contact avec ladite surface.

Ce dispositif capable de limiter et en partie d'éliminer l'énergie et les calories dues à l'échauffement entre aussi dans le cadre de la présente invention.

Selon l'invention, le dispositif destiné à l'abrasion, au polissage ou au lustrage, réalisé par utilisation d'un système tridimensionnel à structure souple, est réalisé par utilisation d'un système de type tricot très épais double face, d'une épaisseur minimale de 3 mm, ce tricot présentant une face avant et une face arrière, les 2 faces étant reliées entre elles par une couche intermédiaire de mono filaments de liaison.

Selon l'invention, le dispositif est notamment un disque, choisi parmi des disques abrasifs, disques de polissage ou de lustrage, destinés à la retouche et à la finition de surfaces peintes, vernies et/ou traitées par d'autres procédés. Il peut cependant avoir une toute autre forme.

Lorsque le dispositif est destiné à l'abrasion, au polissage ou au lustrage, le dispositif, utilisé selon la présente invention, possède une structure, analogue à celle des dispositifs décrits dans la demande française FR 2 857 611 mais dans laquelle la mousse polymère a été remplacée par un système tridimensionnel à structure souple de type tricot très épais, et procure ainsi l'avantage inattendu de la dissipation de l'énergie et des calories dues à l'échauffement par frottements.

Le dispositif, utilisé selon une forme de réalisation de la présente invention, qui permet l'abrasion, le polissage et/ou le lustrage "tridimensionnel" comprend une première surface externe abrasive, lustrante ou de polissage, le cas échéant disposées sur un support, contrecollée au moyen d'une colle, sur un élément formant interface constitué d'un système tridimensionnel de type tricot épais, à structure souple, notamment d'un élément formant interface constitué d'un système de tricot très épais d'une épaisseur au moins double de celle des tricots standards, présentant une face avant et une face arrière, les 2 faces étant reliées entre elles par une couche intermédiaire de mono filaments de liaison. La deuxième surface, tridimensionnelle de type tricot épais, à structure souple, étant elle-même contrecollée sur un revêtement arrière pouvant permettre de servir d'accroche aux plateaux de la machine.

Selon une forme de réalisation particulière de la présente invention, le dispositif d'abrasion, de polissage et/ou de lustrage "tridimensionnel" comporte une première surface externe abrasive, lustrante ou de polissage munie d'un support arrière, disposée sur une seconde surface tridimensionnelle de type tricot épais, à structure souple, ladite surface abrasive, lustrante ou de polissage étant fixée sur le système tridimensionnel de type tricot épais, à structure souple, par l'intermédiaire d'un système de type Velcro@ s'attachant au support arrière de la surface abrasive, lustrante ou de polissage. Le système de type Velcro® permet d'assurer une plus grande facilité d'utilisation comme par exemple le choix de la nature de la surface abrasive, de polissage ou lustrante adapté à la pièce à traiter ou l'échange des différentes parties du dispositif, en fonction de l'usure.

La gamme de dispositifs d'abrasion, de polissage ou de lustrage selon l'invention est plus particulièrement utilisée dans l'industrie automobile (peinture), mais peut être également employée dans tout autre type d'industrie, pour la finition, la rénovation, le polissage, le nettoyage, les retouches, les reprises de grains en zone de retouche avec notamment l'avantage d'éviter les risques de formation d'auréoles. D'une manière générale et non limitative, cette gamme de produits d'abrasion, de polissage ou de lustrage est avantageusement utilisée dans l'industrie automobile, ou par exemple dans la restauration d'objets. La gamme de dispositifs d'abrasion, de polissage ou de lustrage est particulièrement adaptée à la retouche et à la finition des surfaces peintes, vernies ou traitées par d'autres procédés. La présence d'un support de tricot très épais tel que défini précédemment, qui permet d'assurer une compression adaptée aux imperfections de surface de l'objet traité, à toute étape et à tout moment de l'opération d'abrasion, de polissage ou de lustrage, rend le dispositif particulièrement performant.

Le dispositif destiné à l'abrasion, au polissage ou au lustrage comprend un revêtement arrière sous forme d'un jersey d'accrochage.

D'une manière générale : le revêtement arrière du dispositif, sous forme d'une surface de type Jersey (comme par exemple de maille grattée Jersey), est de préférence contrecollé sur le système tridimensionnel de type tricot épais, à structure souple. La partie supérieure du système tridimensionnel de type tricot épais, à structure souple peut être collée sur la surface arrière de l'élément destiné à l'abrasion, au polissage ou au lustrage, ou peut être éventuellement revêtue d'un système de type Velcro@ permettant de fixer l'ensemble sous la surface destinée à l'abrasion, au polissage ou au lustrage, par adhésion sur le support arrière de cette surface par l'intermédiaire d'une surface de type jersey maille grattée collée sur la surface arrière cet l'élément destiné à l'abrasion, au polissage ou au lustrage,.

Selon encore d'autres formes de réalisation du dispositif utilisé selon l'invention, le dispositif comprend une surface abrasive, lustrante ou de polissage, ayant une première surface soit abrasive de type « toile abrasive », soit aiguilletée, le cas échéant disposée sur un support, cette surface aiguilletée pouvant être constituée d'une surface de fibres, poils ou filaments de laine naturelle ou synthétique, de viscose, de polyester ou de mélanges de ces matières, répartis en faisceaux ou disposés individuellement de manière uniforme, ou pouvant être constituée d'une surface de feutre par exemple de type non tissé formée de poils de viscose et/ou de polyester et/ou de laine agglutinés et foulés soit d'une nappe tissée ou tricotée en fibre microfibre ou de toute autre surface textile pouvant être douée de caractère lustrant, disposées sur ledit support. Lorsque la surface est constituée de laine naturelle, la laine est avantageusement calibrée à 26 µm. Il est entendu que selon certains aspects particuliers de l'invention, lorsque la première surface est une surface de feutre ou de tout autre textile à caractère lustrant, la fixation sur un support intermédiaire peut, dans certains cas, en fonction de sa rigidité, s'avérer non indispensable.

Lorsque le dispositif comprend une surface de fibres, de poils ou de filaments de laine (ou un mélange comprenant de la laine), la longueur des fibres peut être comprise entre 2 et 25 mm, de préférence entre 3 et 15 mm, de manière à assurer une efficacité optimum en fonction de la surface à traiter. Les autres types de surfaces textiles lustrantes peuvent également avoir une épaisseur comprise entre 2 et 12 mm, de préférence entre 2 et 8 mm.

Selon encore une forme de réalisation du dispositif utilisé selon l'invention, le support est constitué de toute matière susceptible de conférer une rigidité ou raideur à la surface de fibres ou filaments, en la renforçant, tout en maintenant une flexibilité suffisante, d'une part pour son adaptabilité aux imperfections de surface du matériau à polir, et d'autre part pour assurer un retour de l'ensemble à son état initial après flexion sur les imperfections de la surface traitée. Le support peut être notamment un support de toile, par exemple (et à titre non limitatif) un support de toile de polyester tissé. Lorsque la surface externe du dispositif est une « toile abrasive », avantageusement des grains abrasifs sont fixés sur un support de toile assurant la rigidité.

La surface externe du dispositif destiné à l'abrasion, au polissage ou au lustrage (première surface), peut être constituée notamment d'une surface de fibres ou filaments aiguilletée de type « poils » de « laine » disposée sur un support. D'une manière générale, la matière constituant le support arrière est choisie de telle manière qu'elle puisse adhérer avec une efficacité satisfaisante sur le tissu constituant la partie supérieure du système tridimensionnel de type tricot épais, à structure souple (seconde surface). Avantageusement, cette surface aiguilletée est fixée sur une toile de polyester, permettant d'en assurer la rigidité.

Lorsque la surface externe est une surface abrasive, lustrante ou polissante de type feutre, il s'agit d'une étoffe épaisse de tissu non-tissé, pouvant être composée par exemple de fibres de polyester et/ou de fibres de polyamide ou de mélange de fibres, elle peut être formée de poils de viscose et/ou de polyester et/ou de laine agglutinés et foulés. Compte tenu de la rigidité de ce type de produit, la fixation sur une toile support peut s'avérer non indispensable, le feutre pouvant être collé directement sur la seconde surface. Lorsque la surface externe est une surface abrasive lustrante polissante de type feutre sous forme d'une étoffe épaisse, cette dernière a en général une épaisseur entre 2 et 10 mm.

Lorsque la surface externe est une surface abrasive, lustrante ou polissante constituée d'une nappe tissée ou tricotée en fibre microfibre. Cette nappe sera alors directement contre collé sur l'autre surface

Des modes particuliers des éléments constituant la surface lustrante sont également décrits dans la demande européenne EP 988 933.

Selon enfin une autre forme encore de réalisation de l'invention, la surface lustrante ou de polissage, constituée de la surface externe de fibres ou filaments aiguilletée, disposée sur un support, contrecollé sur une surface servant de support arrière, peut avoir une épaisseur variant entre 3 et 30 mm et de préférence entre 5 et 15 mm.

Les contre-collages des couches entre-elles peuvent être assurés par une couche de colle. Ladite colle peut être choisie parmi toutes les types de colles ou de résines habituellement utilisables pour la nature des tissus employés, et plus particulièrement parmi les colles acryliques ou polyuréthane ou toute autre colle compatible avec les surfaces et assurant une adhérence et une résistance suffisante.

Il est entendu que l'utilisation de tous les dispositifs destinés à l'abrasion, au polissage ou au lustrage, décrits ci-avant et qui comprennent un système tridimensionnel de type tricot épais, à structure souple, entre dans le cadre de la présente invention.

L'ensemble destiné à l'abrasion, au polissage ou au lustrage se présente avantageusement et préférentiellement sous forme de disque (destiné à être utilisé, par exemple, dans un appareil rotatif). Il est également possible de l'adapter à d'autres formes en fonction du type d'appareil utilisé (appareil produisant des vibrations, appareil rotatif à bandes, par exemple). Avantageusement, les appareils utilisés peuvent être des appareils à vitesse réglable. Egalement, et bien qu'il soit plus avantageux d'utiliser le dispositif de lustrage selon l'invention à titre d'élément de lustrage d'un outil ou d'un appareil de lustrage, on pourrait utiliser aussi ce dispositif tel quel, à la main comme on le fait d'une brosse.

Selon l'invention il est notamment possible de réaliser le lustrage d'une peinture avec un échauffement limité abaissant la température du processus d'abrasion, de polissage, de lustrage de 10 à 30°C par rapport aux mêmes processus réalisés avec des dispositifs antérieurement connus, ce qui présente un avantage particulièrement intéressant du point de vue de la longévité du disque, du point de vue de la diminution des risques de dégradation de la qualité de la peinture et aussi, par voie de conséquence du point de vue du coût plus limité d'utilisation de ces nouveaux dispositifs. De plus le dispositif selon l'invention permet un usage non seulement pour le polissage ou le lustrage, mais aussi simultanément pour l'abrasion, avec un seul et même système.

D'autres buts et avantages de la présente invention apparaîtront à la lecture de la présente description et des exemples de mode de réalisation, non limitatifs, représenté sur les figures jointes, étant entendu que, à titre d'illustration :
La figure 1 représente une vue en perspective schématique d'un dispositif de lustrage illustrant une réalisation particulière de la présente invention.
La figure 2 représente une coupe plus détaillée des différentes couches dont est formé le dispositif de lustrage représenté sur la figure 1

Lorsque l'ensemble servant au lustrage se présente sous forme de disques, ces derniers peuvent avoir des diamètres compris entre 20 et 210 mm. Plus préférentiellement, des diamètres de 50, 76, 130, 150, 180 ou 200 mm sont spécialement adaptés.

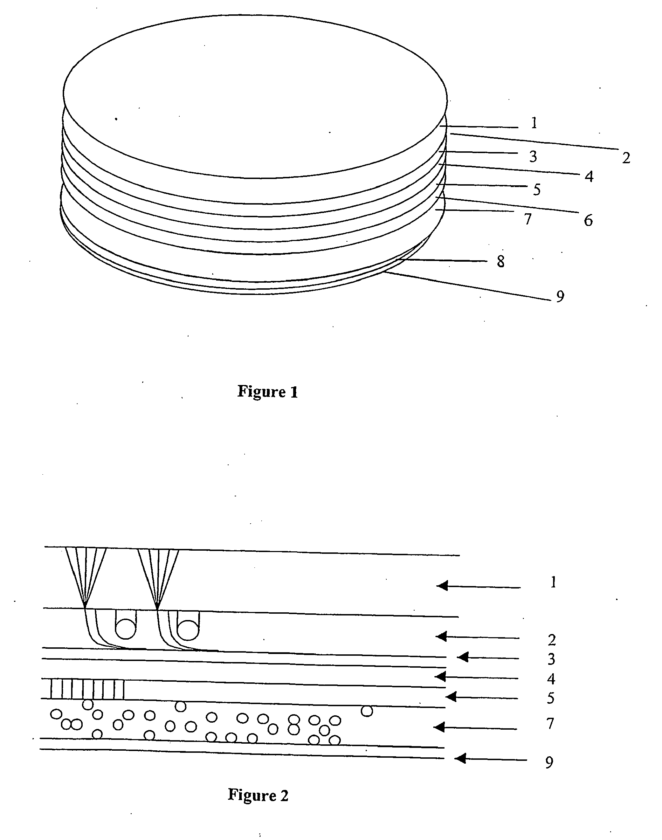

Plus préférentiellement lorsque le dispositif de lustrage se présente sous forme de disque de lustrage, il peut être représenté par la figure 1, ou selon certains aspects particuliers, il peut être représenté en coupe par la figure 2.

La figure 1 représente une vue en perspective d'un dispositif de lustrage, d'abrasion ou de polissage (surface fixée sur le système tridimensionnel de type tricot épais, à structure souple), constitué des différentes couches 1 à 9, à savoir:
- la couche 1 :: surface externe de fibres ou filaments aiguilletés disposés de manière uniforme, ou de feutre, ou de type toile abrasive ;
- la couche 2 :: éventuellement support sur lequel sont fixées les fibres, ou les grains abrasifs assurant la rigidité du système;
- la couche 3 :: couche de colle ;
- la couche 4 :: éventuellement jersey d'accrochage d'une surface de type Velcro®;
- la couche 5 :: éventuellement surface de type Velcro®;
- la couche 6 :: éventuellement couche de colle destinée à fixer la surface de type Velcro® sur le système tridimensionnel;
- la couche 7 :: système tridimensionnel de type tricot épais, à structure souple
- la couche 8 :: couche de colle ;
- la couche 9 :: revêtement arrière.

La figure 2 représente, selon un mode particulier de l'invention, les éléments d'une surface lustrante vus en coupe, dans laquelle:
- la couche 1:: est une surface de faisceaux de filaments disposés de manière uniforme;
- la couche 2:: forme le support sur lequel les faisceaux de fibres sont disposés;
- la couche 3:: représente la surface de colle;
- la couche 4:: représente éventuellement un jersey d'accrochage d'une surface de type Velcro®;
- la couche 5:: est éventuellement une surface de type Velcro@ permettant l'adhésion à la surface 4;
- la couche 6:: est éventuellement une couche de colle destinée à fixer la surface de type Velcro®
- la couche 7:: est le système tridimensionnel de type tricot épais, à structure souple;
- la couche 8 :: est une couche de colle ;
- la couche 9 :: est le revêtement arrière.

Les dispositifs de lustrage utilisés selon l'invention, peuvent être réalisés par préparation de la "surface lustrante" d'une part et du système tridimensionnel de type tricot épais, à structure souple, d'autre part, suivie de la mise en contact du support arrière de la surface lustrante avec le système tridimensionnel de type tricot épais, à structure souple, ou éventuellement avec la surface de type Velcro^{®} du système tridimensionnel de type tricot épais, à structure souple. Il est entendu que, lorsqu'une surface de type Velcro® est utilisée, la mise en contact de ces 2 surfaces peut être réalisée, éventuellement à la main, au moment de l'emploi.

Le système tridimensionnel de type tricot épais, à structure souple peut être réalisé comme décrit dans la demande de brevet français FR2 806 424 au moyen de machines à tricoter, circulaires spécialement aménagées pour la réalisation de la maille à structure de liaison ayant une allure pyramidale, ou au moyen de machines de tricotage linéaire permettant de réaliser le même système. Eventuellement si l'on souhaite introduire une surface de type Velcro^{®} un encollage de la surface supérieure tridimensionnelle de type tricot épais, à structure souple, est réalisé.

La "surface abasive, polissante, lustrante" peut être réalisée par formation d'une surface de grains abrasifs, de fibres aiguilletées ou tissées ou tricotées fixées ou non sur un support, suivie de l'encollage sur le support arrière, au moyen d'une colle adaptée ou d'une résine. La fixation de la surface sur le support s'effectue selon les méthodes habituelles.

Il est entendu que l'utilisation des disques selon l'invention peut s'effectuer avec ou sans additif de lustrage.

Lorsque des additifs de lustrage sont utilisés, ces derniers peuvent être choisis parmi des liquides, des crèmes, des mousses, des cires ou toutes autres compositions connues de l'homme de l'art et destinées à améliorer le lustrage des surfaces. Il est entendu que la consommation de ces additifs est réduite par rapport à leur consommation dans le cas des dispositifs de lustrage classiques.

Les dispositifs de lustrage selon la présente invention, qui dissipent l'énergie et les calories dues à l'échauffement, permettent le lustrage "tridimensionnel" et présentent le grand avantage de s'adapter de façon particulièrement efficace aux défauts de surface de l'objet à lustrer et de procurer ainsi une finition uniforme et homogène des surfaces traitées, par une amélioration de la finition habituelle et de l'homogénéité de l'effet de brillant alliée à une réduction du temps et de l'effort de polissage et surtout sans altération de la surface traitée, par des températures d'échauffement trop élevées. Cela rend possible, par conséquent, l'utilisation des dispositifs selon l'invention, non seulement pour le polissage, le lustrage, mais aussi simultanément pour l'abrasion, avec un seul et même système, ce qui n'était pas possible jusqu'à présent avec les dispositifs connus.

Il est entendu que des disques destinés à l'abrasion ou au polissage peuvent être réalisés de façon similaire.

L'exemple suivant illustre la présente invention.

### Exemple

On réalise un disque de lustrage ayant les caractéristiques suivantes:
- diamètre: 76 mm; épaisseur totale d'environ 14 mm.
   * surface lustrante: diamètre 76 mm et épaisseur 5mm, faisceaux de "poils": 83% laine - 17% polyester répartis uniformément sur un support de toile 100% polyester tissé de grammage 200 g/m² (chaîne 19,3 f/cm, trame 15 d/cm), encollé sur une surface de jersey "maille grattée" de grammage 110 g/m² et d'épaisseur inférieure à 0,5 mm.
   * Support tridimensionnel épais, à structure souple de type tricot épais: diamètre 76mm , épaisseur environ 5 mm, grammage 400 g/m2, contre-collé sur une face d'une surface Velcro^{®} d'épaisseur 1mm et sur l'autre face d'un revêtement arrière de jersey "maille grattée" de grammage 110 g/m² et d'épaisseur inférieure à 0,5 mm.

Les épaisseurs des couches ont été représentées toutes égales sur la figure 1, ce qui ne correspond absolument pas à un mode de réalisation, et n'a pour but que de faciliter la compréhension de l'invention. Il est, bien entendu, évident, par exemple, que la couche 3 de colle ne peut présenter une épaisseur égale.

## Revendications

1. Dispositif d'abrasion, de polissage ou de lustrage, comprenant une surface externe abrasive, lustrante ou de polissage (1), et un revêtement arrière, ledit dispositif d'abrasion, de polissage ou de lustrage comprenant par ailleurs, entre ladite surface externe et ledit revêtement arrière, un élément formant interface constitué d'un système tridimensionnel de type tricot épais à structure souple (7), capable de dissiper au moins partiellement l'énergie et les calories dues à l'échauffement provoqué par un frottement lors d'une opération d'abrasion, de polissage ou de lustrage, ledit système tridimensionnel de type tricot épais à structure souple (7) comprenant une face avant et une face arrière reliées entre elles par une couche intermédiaire **caractérisée en ce qu'**elle comprend de mono-filaments de liaison, lesdits mono-filaments de liaison liant entre eux un rang de mailles de la face avant et un rang de mailles de la face arrière, lesdits rangs de mailles étant décalés l'un par rapport à l'autre dans le sens de tricotage, deux mono-filaments de deux rangs de mailles différents étant liés avec des mailles différentes d'un même rang de mailles ou à des rangs de mailles différents.

2. Dispositif d'abrasion, de polissage ou de lustrage, selon la revendication 1, dans lequel ladite surface externe abrasive, lustrante, ou de polissage est fixée sur un support, et consiste en :
- des fibres ou des filaments aiguilletés disposés de manière uniforme ; ou :
- du feutre ; ou :
- de la toile abrasive.

3. Dispositif d'abrasion, de polissage ou de lustrage, selon l'une quelconque des revendications précédentes, dans lequel ledit système tridimensionnel de type tricot épais à structure souple (7) est collé sur ledit revêtement amère (9).

4. Dispositif d'abrasion, de polissage ou de lustrage, selon l'une quelconque des revendications précédentes, dans lequel ladite surface externe abrasive, lustrante ou de polissage (1) est contrecollée au moyen d'une colle sur ledit système tridimensionnel de type tricot épais à structure souple (7).

5. Dispositif d'abrasion, de polissage ou de lustrage, selon l'une quelconque des revendications précédentes, dans lequel ledit système tridimensionnel de type tricot épais à structure souple (7) est apte à abaisser la température de ladite opération d'abrasion, de lustrage ou de polissage d'au moins 10 degrés.

6. Dispositif d'abrasion, de polissage ou de lustrage, selon l'une quelconque des revendications précédentes, dans lequel ledit système tridimensionnel de type tricot très épais à structure souple (7) présente une épaisseur minimale de 3 mm.

7. Dispositif d'abrasion, de polissage ou de lustrage, selon l'une quelconque des revendications précédentes, consistant en un disque abrasif, de polissage ou de lustrage.

8. Dispositif d'abrasion, de polissage ou de lustrage, selon l'une quelconque des revendications précédentes, dans lequel la surface externe abrasive, lustrante ou de polissage est fixée sur le système tridimensionnel de type tricot épais, à structure souple, par l'intermédiaire d'un système de type Velcro@ (5) collé sur une partie supérieure du système tridimensionnel de type tricot épais à structure souple (7), et s'attachant au support de la ladite surface externe abrasive, lustrante ou de polissage par un jersey d'accrochage (4).

9. Dispositif d'abrasion, de polissage ou de lustrage selon l'une quelconque des revendications précédentes, dans lequel le système tridimensionnel de type tricot épais à structure souple (7) a une masse par unité de surface de 100 à 600 g/m².

## Patentansprüche

1. Vorrichtung zum Abschleifen, Polieren oder Glänzen, umfassend eine äußere abschleifende, glänzende oder polierende Fläche (1) und eine hintere Verkleidung, wobei die Vorrichtung zum Abschleifen, Polieren oder Glänzen überdies zwischen der äußeren Fläche und der hinteren Verkleidung ein Elemente umfasst, das eine Schnittstelle bildet, die von einem dreidimensionalen System des Typs dickes Gewebe mit flexibler Struktur (7) gebildet und geeignet ist, zumindest teilweise die Energie und die Kalorien von der Erhitzung, die durch die Reibung bei einem Abschleif-, Polier- oder Glänzvorgang hervorgerufen wird, zu verteilen, wobei das dreidimensionale Systems des Typs dickes Gewebe mit flexibler Struktur (7) eine Vorderseite und eine Rückseite umfasst, die miteinander durch eine Zwischenschicht verbunden sind, **dadurch gekennzeichnet, dass** diese Monofilamente zur Verbindung umfasst, wobei die Verbindungsmonofilamente eine Maschenreihe der Vorderseite und eine Maschenreihe der Rückseite miteinander verbinden, wobei die Maschenreihen zueinander in Webrichtung versetzt sind, wobei zwei Monofilamente zweier unterschiedlicher Maschenreihen mit unterschiedlichen Maschen einer selben Maschenreihe oder mit unterschiedlichen Maschenreihen verbunden sind.

2. Vorrichtung zum Abschleifen, Polieren oder Glänzen nach Anspruch 1, bei der die äußere abschleifende, glänzende oder polierende Fläche auf einem Träger montiert ist, und besteht aus:
- vernadelten Fasern oder Filamenten, die einheitlich angeordnet sind; oder:
- Filz; oder:
- Schleifleinen.

3. Vorrichtung zum Abschleifen, Polieren oder Glänzen nach einem der vorhergehenden Ansprüche, bei der das dreidimensionale System des Typs dickes Gewebe mit flexibler Struktur (7) auf die hintere Verkleidung (9) geklebt ist.

4. Vorrichtung zum Abschleifen, Polieren oder Glänzen nach einem der vorhergehenden Ansprüche, bei der die äußere abschleifende, glänzende oder polierende Fläche (1) mit Hilfe eines Klebers auf das dreidimensionale System des Typs dickes Gewebe mit flexibler Struktur (7) aufkaschiert ist.

5. Vorrichtung zum Abschleifen, Polieren oder Glänzen nach einem der vorhergehenden Ansprüche, bei dem das dreidimensionale System des Typs dickes Gewebe mit flexibler Struktur (7) geeignet ist, die Temperatur des Abschleif-, Glänz- oder Poliervorgangs um mindestens 10 Grad zu senken.

6. Vorrichtung zum Abschleifen, Polieren oder Glänzen nach einem der vorhergehenden Ansprüche, bei dem das dreidimensionale System des Typs sehr dickes Gewebe mit flexibler Struktur (7) eine Mindestdicke von 3 mm aufweist.

7. Vorrichtung zum Abschleifen, Polieren oder Glänzen nach einem der vorhergehenden Ansprüche, bestehend in einer Schleif-, Polier- oder Glänzscheiben.

8. Vorrichtung zum Abschleifen, Polieren oder Glänzen nach einem der vorhergehenden Ansprüche, bei dem die abschleifende, glänzende oder polierende äußere Fläche auf dem dreidimensionalen System des Typs dickes Gewebe mit flexibler Struktur mit Hilfe eines Systems des Typs Velcro® (5), das auf einen oberen Teil des dreidimensionalen Systems des Typs dickes Gewebe mit flexibler Struktur (7) geklebt ist, befestigt ist und am Träger der äußeren abschleifenden, glänzenden oder polierenden Fläche durch ein Haftjersey (4) anhaftet.

9. Vorrichtung zum Abschleifen, Polieren oder Glänzen nach einem der vorhergehenden Ansprüche, bei dem das dreidimensionale System des Typs dickes Gewebe mit flexibler Struktur (7) eine Masse pro Flächeneinheit von 100 bis 600 g/m² hat.

## Claims

1. A device for abrasion, polishing or buffing comprising an outer abrasive, polishing or buffing surface (1) and a rear coating, said device for abrasion, polishing or buffing further comprising, between said outer surface and said rear coating, an interfacing member constituted by a three-dimensional system of thick knitted fabric type having a flexible structure (7), capable of at least partially dissipating heat energy resulting from heating up due to friction during the operations of abrasion, polishing or buffing, said three-dimensional system of thick knitted fabric type having a flexible structure (7) comprising a front face and a rear face, the two faces being bound together by an intermediate layer **characterized in that** the later comprises binding single filaments, said binding single filaments binding a row of stitches of the front face and a row of stitches of the rear face one to the other, said rows of stiches being offset in the knitting direction, one relative to another, two single filaments of two different rows being bound with different stitches of a given row of stiches or to different rows of stiches.

2. The device for abrasion, polishing or buffing according to one of the preceding claims in which said outer abrasive, buffing or polishing surface is attached to a support, and consists of:
- needled fibres or filaments arranged uniformly,
- felt, or
- abrasive cloth.

3. The device for abrasion, polishing or buffing according to one of the preceding claims in which said three-dimensional system of thick knitted fabric type having a flexible structure (7) is bonded onto said rear coating (9).

4. The device for abrasion, polishing or buffing according to one of the preceding claims in which said outer abrasive, buffing or polishing surface (1) is laminated using an adhesive onto said three-dimensional system of thick knitted fabric type having a flexible structure (7).

5. The device for abrasion, polishing or buffing according to one of the preceding claims in which said three-dimensional system of thick knitted fabric type having a flexible structure (7) is capable of lowering the temperature of the abrasion, polishing, buffing process, by at least 10 degrees.

6. The device for abrasion, polishing or buffing according to one of the preceding claims in which said three-dimensional system of thick knitted fabric type having a flexible structure (7) has a minimum thickness of 3 mm.

7. The device for abrasion, polishing or buffing according to one of the preceding claims consisting of an abrasive, polishing or buffing disc.

8. The device for abrasion, polishing or buffing according to one of the preceding claims wherein the outer abrasive, buffing or polishing surface is fixed onto the three-dimensional system of thick knitted fabric type having a flexible structure, using a Velcro^{®}-type system (5) bonded onto the upper part of the three-dimensional system of thick knitted fabric type having a flexible structure (7) and attaching to the support of said outer abrasive, buffing or polishing surface by an attachment "jersey" (4).

9. The device for abrasion, polishing or buffing according to one of the preceding claims in which the three-dimensional system of thick knitted fabric type having a flexible structure (7) has a mass per unit of surface area of 100 to 600 g/m².
